Europäisches Patentamt

European Patent Office

Office européen des brevets

(19)

(11) Veröffentlichungsnummer : **0 387 376 B1**

(12) # EUROPÄISCHE PATENTSCHRIFT

(45) Veröffentlichungstag der Patentschrift :
**08.07.92 Patentblatt 92/28**

(51) Int. Cl.$^5$ : **G01L 11/00**

(21) Anmeldenummer : **89104615.3**

(22) Anmeldetag : **15.03.89**

(54) **Drucksensor.**

(43) Veröffentlichungstag der Anmeldung :
**19.09.90 Patentblatt 90/38**

(45) Bekanntmachung des Hinweises auf die
Patenterteilung :
**08.07.92 Patentblatt 92/28**

(84) Benannte Vertragsstaaten :
**AT BE CH DE FR GB IT LI LU NL**

(56) Entgegenhaltungen :
**EP-A- 0 241 766**
**EP-A- 0 242 894**
**DE-A- 2 856 183**
**FR-A- 2 520 112**

(73) Patentinhaber : **GLÖTZL GESELLSCHAFT FÜR**
**BAUMESSTECHNIK GMBH**
**Forlenweg 11**
**W-7512 Rheinstetten 4 (DE)**

(72) Erfinder : **Glötzl, Rainer**
**Hans-Sachs-Strasse 3**
**W-7505 Ettlingen (DE)**
Erfinder : **Glötzl, Franz**
**Bienwaldstrasse 10**
**W-7512 Rheinstetten 1 (DE)**
Erfinder : **Jelders, Johannes Theodorus**
**Oudstrijderslei 71**
**B-2070 Ekeren (BE)**

(74) Vertreter : **Lempert, Jost, Dr.rer.nat. et al**
**Patentanwälte Dr. Ing. Hans Lichti Dipl.-Ing.**
**Heiner Lichti Dipl.-Phys. Dr.rer.nat. Jost**
**Lempert Postfach 410760**
**W-7500 Karlsruhe 41 (DE)**

EP 0 387 376 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen Drucksensor mit einem gestreckten Tragkörper, der auf seinem Außenumfang zwischen Erhöhungen verlaufende Längsnuten aufweist und um den ein Lichtleiter in Wendelform herumgelegt ist, dessen eines Ende mit einer Lichtquelle, dessen anderes Ende mit einem Lichtdetektor verbindbar ist.

Ein gattungsgemäßer Drucksensor ist aus der EP-A-242 894 bekannt. Bei diesem Drucksensor ist der Tragkörper als elastischer Hohlkörper mit mehr oder minder scharfen Kanten im Bereich seiner sich axial erstreckenden Erhöhungen ausgebildet. Der Lichtleiter ist wendelförmig um den Tragkörper herumgelegt. Die Flüssigkeit, deren Druck gemessen werden soll, wird durch das Innere des Tragkörpers geleitet. Bei Druckerhöhungen dehnt sich der Tragkörper aus und drückt mit seinen Längskanten gegen den um ihn gewickelten Lichtleiter, auf den derart eine Zugspannung ausgeübt wird, die dazu führt, daß die Wendelform zwischen den Erhöhungen also im Bereich der Nuten, abgeflacht wird. Damit erhält die Wendel in diesem Bereich einen größeren Krümmungsradius und im Bereich der Erhöhungen einen niedrigeren Krümmungsradius, als dies im unbelasteten Zustand der Fall ist. Hierdurch erfolgt eine erhöhte Auskopplung von durch den Lichtleiter gesandtem Licht, wobei der Verlust an dem der Lichtquelle entgegengesetzten Ende des Lichtleiters meßbar ist.

Nachteilig bei dieser Ausgestaltung ist insbesondere, daß der Lichtleiter unter Zugspannung gesetzt wird, was, insbesondere bei häufigem Druckwechsel, zu einer erhöhten Belastung und zu einem frühen Altern und damit Funktionsunfähigkeit des Lichtleiters führen kann. Darüberhinaus muß der Lichtleiter, da er frei um den Tragkörper gewickelt ist, ohne axial gehalten zu werden, entweder mit einem hinreichend großen Wendelabstand gewickelt werden, oder aber es besteht die Gefahr eines Verschiebens einzelner Wendelabschnitte, so daß sie sich berühren, was zu einer Verfälschung der Messung führen kann.

Der Erfindung liegt die Aufgabe zugrunde, unter Vermeldung der vorgenannten Machteile einen Drucksensor zu schaffen, der eine hohe Genauigkeit und Empfindlichkeit der Druckmessung gewährleistet.

Erfindungsgemäß wird die genannte Aufgabe bei einem Drucksensor der eingangs genannten Art dadurch gelöst, daß der Tragkörper in einen Hohlkörper eingebaut ist und von diesem unter Freilassung eines Zwischenraums zwischen beiden umgeben ist, daß in den Zwischenraum führende Ein- und Auslaßöffnungen vorgesehen sind, daß der Tragkörper eine wendelförmig geführte Nut aufweist, deren Tiefe geringer ist als die Tiefe der Längsnuten und in der der Lichtleiter eingelegt ist, und daß über dem Lichtleiter eine dichte elastische Zwischenlag um den Tragkörper gelegt ist. Der Drucksensor mißt unmittelbar den Flüssigkeitsdruck der im Hohlraum zwischen dem Tragkörper und dem Hohlkörper befindlichen Flüssigkeit. Indirekt kann bei einem abgeschlossenen System gegebenenfalls der auf die Hohlkörperwandung ausgeübte äußere Druck oder auch bei vorgegebener Flüssigkeitsmasse in einem abgeschlossenen System festen Volumens eine Temperaturerhöhung gemessen werden, die mangels Möglichkeit zur Ausdehnung der Flüssigkeit bei den genannten Voraussetzungen eine Druckerhöhung bewicht. Insbesondere können im letzteren Falle aber auch zur Druckmessung an entfernten Orten Ein- und/oder Auslaßöffnungen zum Zwischenraum zwischen Hohlkörper und Tragkörper vorgesehen sein. Eine bevorzugte Ausgestaltung sieht dann weiterhin vor, daß Ein- und Auslaß an Stirnseiten des Hohlkörpers ausgebildet sind, wobei sich eine äußert bevorzugte Ausbildung dadurch auszeichnet, daß Ein- und Auslaß an einer gemeinsamen Stirnseite des Hohlkörpers ausgebildet sind. Der Hohlkörper kann, je nach Einsatzzweck starr oder mehr oder minder elastisch ausgebildet sein. Die gesamte Anordnung und insbesondere der Tragkörper weisen vorzugsweise eine zylindrische Form auf, wobei eine bevorzugte Ausbildung sich dadurch auszeichnet, daß der Hohlkörper den Tragkörper konzentrisch umgibt.

Weiterbildungen sehen vor, daß stirnseitig am Hohlkörper Abdeckplatten vorgesehen sind, wobei insbesondere der Hohlkörper stirnseitige radiale Flansche aufweist, mit denen er mit den Abdeckplatten verbunden ist, und/oder daß die Abdeckplatten axiale Vertiefungen aufweisen, in denen die Stirnseiten des Tragkörpers einsitzen.

Eine weitere Ausbildung sieht vor, daß der Lichtleiter durch das Innere des Tragkörpers zurückgeführt ist. Diese Ausgestaltung ist insbesondere vorteilhaft, wenn auch Ein- und Auslässe zum Zwischenraum zwischen Hohlkörper und flexibler Abdeckung des Lichtleiters auf dem Tragkörper an einer Stirnseite ausgebildet sind. Hierdurch wird erreicht, daß der Drucksensor derart eingebaut werden kann, daß nur die Zugänglichkeit von einer Stirnseite erforderlich ist. Eine Weiterbildung sieht vor, daß in den Längsnuten elastisches Material einliegt. Hierdurch wird der Lichtleiter im Bereich der Nuten unterstützt, ohne daß verhindert wird, daß dieser sich in die Nuten eindrückt. Hierdurch kann die Standdauer des Lichtleiters, insbesondere bei hohen Druckwechselzahlen verbessert werden.

Eine Weiterbildung zeichnet sich dadurch aus, daß die Längsnuten über Verbindungskanäme mit externen Fluidanschlüssen in Verbindung stehen. Hierdurch kann ein Differenzdruck zwischen dem Druck im Zwischenraum zwischen Hohlkörper und flexibler Abdeckung und dem Druck in den Längsnuten innerhalb der Abdekkung bestimmt werden.

Die erfindungsgemäße Ausgestaltung des Drucksensors mit Wendelnuten auf seinem Tragkörper bedingt, daß der Lichtleiter in einer engen Wendel geführt werden kann, da er in die Nuten eingelegt wird, ohne daß eine Gefahr besteht, daß benachbarte Wendelbereiche sich berühren. Hierdurch wird eine höhere Empfindlichkeit bei kompakten Abmessungen des gesamten Drucksensors erreicht, da mehr Windungen um den Tragkörper auf vorgegebener Länge herumgelegt werden können, als dies bei einer freien Wendelung ohne axiale Festlegung der Lichtleiterwendel möglich wäre. Durch die Ausbildung des Tragkörpers als starrer Körper und die Ausübung des zu messenden Druckes von außen wird erreicht, daß auf den Lichtleiter keine Zugspannungen ausgeübt werden, wie dies beim Stand der Technik der Fall ist. Hierdurch wird die Standfestigkeit des Lichtleiters und damit des gesamten Drucksensors erhöht.

Wesentlich ist, daß bei der erfindungsgemäßen Vorrichtung der Lichtleiter nicht gestreckt wird, keine Dehnungsbruchgefahr gegeben ist und die Bruchgefahr wesentlich reduziert wird. Insbesondere ist auch die Formänderung des Lichtleiters durch die Tiefe der Längsnuten begrenzt.

Der erfindungsgemäße Drucksensor kann hydraulisch oder pneumatisch beaufschlagt werden, d.h. es kann der Druck einer Flüssigkeit oder auch eines Gases im Hohlraum zwischen Abdeckung auf dem Tragkörper und diesen mit Abstand umgebenden Hohlkörper gemessen werden.

Die Einsatzgebiete des erfindungsgemäßen Drucksensors sind vielseitig. Neben bekannten technischen Einsatzgebieten kann der Drucksensor auch im medizinischen Bereich zur Blutdruckmessung und zur Messung von Pulsschlägen eingesetzt werden.

Weitere Vorteile und Merkmale der Erfindung ergeben sich aus den Ansprüchen und aus der nachfolgenden Beschreibung, in der ein Ausführungsbeispiel des erfindungsgemäßen Sensors unter Bezugnahme auf die Zeichnung im einzelnen erläutert ist. Dabei zeigt:

Figur 1 Eine Längsansicht des erfindungsgemäßen Sensors mit Hohlkörper und stirnseitigen Abdeckungen im Axialschnitt;

Figur 2 einen Querschnitt entsprechend A-A der Figur 1 durch den Tragkörper; und

Figur 3 eine vergrößerte Darstellung des Bereichs X der Figur 1 mit Schnitt durch den Lichtleiter.

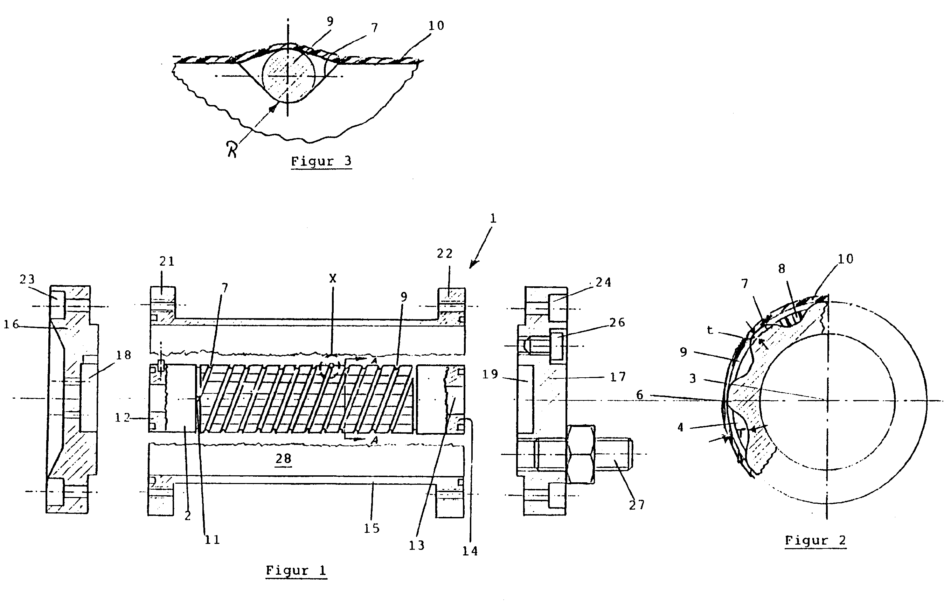

Der erfindungsgemäße Drucksensor 1 weist einen in seiner Grundform zylindrischen Tragkörper 2 auf, auf dessen Außenumfang zunächst parallel zu seiner Achse 3 (Figur 2) verlaufende Längsnuten 4 ausgebildet sind, zwischen denen sich Erhöhungen 6 befinden. Weiterhin sind im Außenumfang des Tragkörpers 2 schrauben- oder wendelförmig geführten Nuten 7 ausgebildet. Die Tiefe t der Wendelnuten 7 ist wesentlich geringer als die Tiefe T der Längsnuten 4. Die Längsnuten 4 können mit einem elastischen Material 8 ausgefüllt sein (wie dies in Figur 2 in einer Nut angedeutet ist).

In die Wendelnuten 7 des Tragkörpers 2 ist eine optische Faser als Lichtleiter 9 eingelegt, der entsprechend dem Wendelverlauf der Nuten 7 ebenfalls wendel- oder schraubenförmig um den Tragkörper 2 geführt ist. Durch die Ausbildung von wendelförmigen Nuten 7 im Tragkörper 2, in denen der Lichtleiter 9 liegt, kann der Lichtleiter in engen Wendeln mit geringer Steigung und damit einer großen Länge geführt werden, ohne daß Gefahr besteht, daß sich benachbarte Wendelabschnitte des Lichtleiters 9 berühren, was zu einer Verfälschung des Meßergebnisses durch Auskopplung von Licht führen könnte. Der Lichtleiter 9 ist in der Darstellung der Figur 1 nur über einen Teil der Wendelnut 7 dargestellt und im Bereich X abgeschnitten. Tatsächlich wird er beim praktischen Sensor über die gesamte Wendelnut 7 in dieser einliegen und kann gegebenenfalls durch den Durchbruch 11 im Bereich der linken Stirnseite 12 des Tragkörpers 2 in dessen inneren Hohlraum 13 hinein- und durch diesen zur rechten Stirnseite 14 zurückgeführt sein. Derart wird der Lichtleiter 9 sowohl mit seinem einen Ende, an dem eine Lichtquelle angeordnet ist, deren Licht in den Lichtleiter eingekoppelt wird, als auch mit seinem andern Ende, an dem ein Lichtdetektor angeordnet ist, in den das Licht aus dem Lichtleiter 9 eingekoppelt wird, am gleichen Ende (hier 14) des Tragkörpers 2 enden. Auf dem Tragkörper 2 und über dem Lichtleiter 9 ist ein Schlauchstück 10 als flexible Abdeckung aufgebracht, die an seine Stirnseiten dicht auf dem Tragkörper aufsitzt, gegebenenfalls mit Klammern oder dergleichen festgespannt sein kann, so daß der Raum innerhalb des Schlauchstücks, insbesondere die Längsnuten 4, gegen den das Schlauchstück 10 umgebenden Raum fluiddicht abgedichtet ist.

Der Tragkörper 2 ist von einem zylindermantelförmigen Hohlkörper 15 konzentrisch umgeben. Tragkörper 2 und Hohlkörper 15 werden mittels Abdeckplatten 16,17 konzentrisch zueinander gehalten, wobei der Tragkörper 2 in konzentrischen Ausnehmungen 18,19 der Abdeckplatten 16,17 einsitzen kann. Die Abdeckplatten 16,17 sind mit dem Hohlkörper 15 über an diesem ausgebildete Radialflansche 21,22 mittels Schrauben befestigt. Die Schrauben sind selbst nicht dargestellt, aber die in den Flanschen 21,22 mit diesen zusammenwirkenden Innengewinde sowie die Durchbrüche 23,24 in den Abdeckplatten 16,17.

Zumindestens eine der Abdeckplatten (hier 17) weist einen Einlaß 26 und einen Auslaß 27 für die Flüssigkeit auf, deren Druck gemessen werden soll. Hierdurch gelangt die Flüssigkeit in den Hohlraum 28 zwischen Tragkörper 2 und Hohlkörper 15, so daß sie den Lichtleiter 9 beaufschlagen und auf diesen drücken kann. Hierdurch wird der Lichtleiter 9 im Bereich der Längsnuten 4 in diese, gegebenenfalls unter Nachgeben des einliegenden weichen Materials 8, eingedrückt, wodurch eine Verbiegung gegenüber dem kreisringförmigen Querschnittsverlauf ohne Belastung erfolgt, wodurch in den Bereichen erhöhten Krümmungsradius mehr Licht austreten kann und damit ein Lichtverlust eintritt, der durch den Lichtdetektor an einem Ende des Lichtleiters 9 feststellbar ist. Es hat sich gezeigt, daß der Lichtverlust im wesentlichen linear zum auf den Lichtleiter 9 ausgeübten Druck erfolgt.

In die Längsnuten können weiterhin Öffnungen von Verbindungskanälen zu an einer Stirnseite des Tragkörpers 2 ausgebildeten Verbindungskanälen (nicht dargestellt) münden, so daß auch die Längsnuten mit einem weiteren Druck, wie dem stabilen Druck einer Strömung, beaufschlagt werden und derart ein Differenzdruck gemessen werden kann.

Obwohl der erfindungsgemäße Drucksensor der sämtlichen gattungsgemäßen Drucksensoren dieser Art primär den Druck einer Flüssigkeit mißt, können bei vorgegebener Flüssigkeitsmenge, wenn die dargestellte Sensoreinrichtung beispielsweise an einem abgeschlossenen Behältnis angeordnet ist, auch über das Ausdehnungsstreben, was im abgeschlossenen Behältnis zu einer Druckerhöhung führt, Temperaturerhöhungen gemessen werden.

## Patentansprüche

1. Drucksensor mit einem gestreckten Tragkörper (2), der auf seinem Außenumfang zwischen Erhöhungen verlaufende Längsnute (4) aufweist und um den ein Lichtleite (9) in Wendelform herumgelegt ist, dessen eines Ende mit einer Lichtquelle, dessen anderes Ende mit einem Lichtdetektor verbindbar ist,
**dadurch gekennzeichnet,**
daß der Tragkörper (2) in einen Hohlkörper (15) eingebaut ist und von diesem unter Freilassung eines Zwischenraums (28) zwischen beiden umgeben ist, daß in den Zwischenraum führende Ein- und Auslaßöffnungen (28) vorgesehen sind, daß der Tragkörper (2) eine wendelförmig geführte Nut (7) aufweist, deren Tiefe (t) geringer ist als die Tiefe (T) der Längsnuten (4) und in der der Lichtleiter (9) eingelegt ist, und daß über dem Lichtleiter (9) eine dichte elastische Zwischenlage (10) um den Tragkörper gelegt ist.

2. Sensor nach Anspruch 1, dadurch gekennzeichnet, daß der Tragkörper (2) eine zylindrische Grundform aufweist.

3. Sensor nach einem der Ansprüche 1 oder 2, dadurch gekennzeichnet, daß der Hohlkörper (15) den Tragkörper (2) konzentrisch umgibt.

4. Sensor nach einem der Ansprüche 1 bis 3, dadurch gekennzeichnet, daß Ein- und Auslaß an Stirnseiten des Hohlkörpers (15) ausgebildet sind.

5. Sensor nach Anspruch 4, dadurch gekennzeichnet, daß Ein und Auslaß an einer gemeinsamen Stirnseite des Hohlkörpers (15) ausgebildet sind.

6. Sensor nach einem der Ansprüche 1 bis 5, dadurch gekennzeichnet, daß stirnseitig am Hohlkörper (15) Abdeckplatten (16,17) vorgesehen sind.

7. Sensor nach einem der Ansprüche 1 bis 6, dadurch gekennzeichnet, daß der Hohlkörper (15) stirnseitige radiale Flansche (21,22) aufweist, mit denen er mit den Abdeckplatten (16,17) verbunden ist.

8. Sensor nach Anspruch 6 oder 7, dadurch gekennzeichnet, daß die Abdeckplatten (16,17) axiale Vertiefungen (18,19) aufweisen, in denen die Stirnseiten (12, 14) des Tragkörpers (2) einsitzen.

9. Sensor nach einem der Ansprüche 1 bis 8, dadurch gekennzeichnet, daß der Lichtleiter durch das Innere des Tragkörpers (2) zurückgeführt ist.

10. Sensor nach einem der Ansprüche 1 bis 9, dadurch gekennzeichnet, daß in den Längsnuten (4) elastisches Material (8) einliegt.

11. Sensor nach einem der Ansprüche 1 bis 10, dadurch gekennzeichnet, daß die Längsnuten (4) über Verbindungskanäle mit externen Fluidanschlüssen in Verbindung stehen.

## Claims

1. Pressure sensor with an elongated support body (2), which has on its outer circumference longitudinal grooves (4) passing between raised portions and around which is helically placed a light guide (9), whose one end can be connected to a light source and whose other end can be connected to a light detector,
**characterized in that**
the support body (2) is incorporated into a hollow body (15) and is surrounded by the latter whilst leaving a gap (28) between the two, that inlets and outlets (28) leading into the gap are provided, that the support body (2) has a helically guided groove (7), whose depth (t) is smaller than the depth (T) of the longitudinal grooves (4) and in which is placed the light guide (9) and that over the light guide (9) a dense elastic intermediate layer (10) is placed round the support body (21).

2. Sensor according to claim 1, characterized in that the support body (2) has a cylindrical basic shape.

3. Sensor according to one of the claims 1 or 2, characterized in that the hollow body (15) concentrically surrounds the support body (2).

4. Sensor according to one of the claims 1 to 3, characterized in that the inlet and outlet are formed on the faces of the hollow body (15).

5. Sensor according to claim 4, characterized in that the inlet and outlet are formed on a common face of the hollow body (15).

6. Sensor according to one of the claims 1 to 5, characterized in that cover plates (16, 17) are frontally provided on the hollow body (15).

7. Sensor according to one of the claims 1 to 6, characterized in that the hollow body (15) has frontal radial flanges (21, 22), with which it is connected to the cover plates (16, 17).

8. Sensor according to claims 6 or 7, characterized in that the cover plates (16, 17) have axial depressions (18, 19), in which are located the faces (12, 14) of the support body (2).

9. Sensor according to one of the claims 1 to 8, characterized in that the light guide is returned through the interior of the support body (2).

10. Sensor according to one of the claims 1 to 9, characterized in that elastic material (8) is placed in the longitudinal grooves (4).

11. Sensor according to one of the claims 1 to 10, characterized in that the longitudinal grooves ( 4 ) are corrected by means of correcting channels to external fluid corrections.


**Revendications**

1. Capteur de pression avec un support (2) allongé qui est muni sur sa périphérie extérieure de rainures longitudinales (4) qui s'étendent entre des bosses et autour duquel est placé un guide de lumière (9) de forme hélicoïdale dont l'une des extrémités peut être reliée à une source de lumière et l'autre extrémité, à un détecteur de lumière,
**caractérisé en ce que**
le support (2) est monté dans un corps creux (15) et entouré par celui-ci en laissant un espace libre (28) entre les deux, qu'il est prévu des orifices d'entrée et de sortie (28) menant dans l'espace libre, que le support (2) présente une rainure (7) de forme hélicoïdale dont la profondeur (t) est plus petite que la profondeur (T) des rainures longitudinales (4) et dans laquelle est placé le guide de lumière (9), et qu'au-dessus du guide de lumière (9), une couche intermédiaire élastique (10) est placée autour du support (2).

2. Capteur selon la revendication 1, caractérisé en ce que le support (2) présente une forme de base cylindrique.

3. Capteur selon l'une des revendications 1 ou 2, caractérisé en ce que le corps creux (15) entoure concentriquement le support (2).

4. Capteur selon l'une des revendications 1 à 3, caractérisé en ce que l'entrée et la sortie sont conformées sur les faces frontales du corps creux (15).

5. Capteur selon la revendication 4, caractérisé en ce que l'entrée et la sortie sont conformées sur une face frontale commune du corps creux (15).

6. Capteur selon l'une des revendications 1 à 5, caractérisé en ce que des plaques de recouvrement (16, 17) sont prévues sur le côté frontal du corps creux (15).

7. Capteur selon l'une des revendications 1 à 6, caractérisé en ce que le corps creux (15) comporte des brides radiales frontales (21, 22) par lesquelles il est raccordé aux plaques de recouvrement (16, 17).

8. Capteur selon l'une des revendications 6 ou 7, caractérisé en ce que les plaques de recouvrement (16, 17) présentent des creux axiaux (18, 19) dans lesquels sont engagées les faces frontales (12, 14) du support (2).

9. Capteur selon l'une des revendications 1 à 8, caractérisé en ce que le guide de lumière est ramené par l'intérieur du support (2).

10. Capteur selon l'une des revendications 1 à 9, caractérisé en ce qu'une matière élastique (8) est insérée dans les rainures longitudinales (4).

11. Capteur selon l'une des revendications 1 à 10, caractérisé en ce que les rainures longitudinales (4) communiquent avec des raccordements de fluide externes par l'intermédiaire de canaux de raccordement

Figur 1

Figur 2

Figur 3

6